# EUROPEAN PATENT APPLICATION

(11) **EP 4 838 964 A1**
(43) Date of publication of application: **11.11.2026**
(21) Application number: 26177130.7
(22) Date of filing: 07.05.2026
(51) Int. Cl.: H04W 52/02

(54) **MITIGATION OF BATTERY POWERED DEVICES TRANSMITTING PERIODIC TRACKING AREA UPDATES**

(30) Priority: 09.05.2025 IN 202541044915; 27.10.2025 US 202519369790
(71) Applicant: Itron, Inc., Liberty Lake, WA 99019 (US)
(72) Inventor: GOURABATHUNI, Venkatesh, Liberty Lake, 99019 (US); DUSENBERRY, Robert Vernon, Liberty Lake, 99019 (US); SANDERS, Jeffrey Steele, Liberty Lake, 99019 (US); TULLURI, Sateesh, Liberty Lake, 99019 (US); ANDERSON, Benjamin Lee, Liberty Lake, 99019 (US); BENSON, Eric S., Liberty Lake, 99019 (US)
(74) Representative: Morrall, Jonathan Ian McLachlan

(57) **Abstract**

In various embodiments, a method comprises transmitting, by a node in a network, a message to a base station included in the network, where transmitting the message sets an active timer, determining an expiration time based on a value of an expiration period of the active timer, and transmitting, by the node prior to the expiration time, a heartbeat message in lieu of a plurality of periodic tracking messages, where transmitting the heartbeat message resets the active timer.

## Description

### CROSS-REFERENCE TO RELATED APPLICATIONS

This application claims priority benefit to the Indian Provisional Patent Application titled, "MITIGATION OF BATTERY POWERED DEVICES TRANSMITTING PERIODIC TRACKING AREA UPDATES," filed on May 9, 2025, and having Serial No. 202541044915. The subject matter of this related application is hereby incorporated herein by reference.

### BACKGROUND

### Field of the Various Embodiments

The various embodiments relate generally to communications networks, and more specifically, to mitigation of battery powered devices transmitting periodic tracking area updates.

### Description of the Related Art

Many enterprises deploy large numbers of endpoint devices that are generally stationary, such as power meters, water meters, street light controllers, traffic controllers, and the like, as well as back-office management systems that monitor and/or control the endpoint devices. To deploy meters and other endpoint devices over a large geographic area, various carrier networks operated by different network providers under different access conditions are utilized. Different carrier networks can provide connectivity using different towers, transport protocols, security requirements, and the like. As a result, many enterprises need to manage endpoint devices based on the communication characteristics of the carrier networks and the characteristics of the endpoint devices.

### BRIEF DESCRIPTION OF THE DRAWINGS

So that the manner in which the various embodiments can be understood in detail, a description of the inventive concepts may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 is a conceptual diagram of a networked environment including user equipment (UE) communicating with a cellular network, according to various embodiments;
Figure 2 is a more detailed view of a user equipment of the networked environment of Figure 1, according to various embodiments;
Figure 3 is an example messaging flow diagram showing messaging among devices of the networked environment of Figure 1, according to various embodiments; and
Figure 4 illustrates a flow diagram of method steps for a messaging application to mitigating the transmission of tracking area updates, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

Many enterprises deploy large numbers of endpoint devices that are generally stationary, such as power meters, water meters, street light controllers, traffic controllers, and the like, as well as back-office management systems that monitor and/or control the endpoint devices. A given endpoint device can be installed at a specific location (e.g., installed in a socket, mounted on a power pole, etc.). In many cases, the endpoint device can be a type of user equipment (UE) that draws power from an internal power source, such as a battery that is charged through chemical and/or solar energy. In order to conserve energy, such battery-powered devices (BPDs) typically operate intermittently and power down and/or go into very low power mode for extended periods of time. When an enterprise deploys large numbers of UEs over a large geographic area, however, various carrier networks operated by different network providers under different access conditions are utilized.

In some instances, the UEs are installed to connect to a cellular network. A back office for the cellular network manages the UEs that are connected to a given base station, e Node B (eNB), and/or cellular tower. The eNB usually tracks each UE that is connected to the cellular network and requires that each UE transmit tracking area update messages to notify the availability of the UE to the cellular network. Such requirements cause the battery-powered UEs to continually transmit tracking area update messages at timed intervals imposed by the cellular network. As a result, the battery-powered UEs expend significant amounts of power when transmitting the tracking area update messages. Such requirements drain the battery prematurely and otherwise limit the amount of energy that is available to perform more critical tasks, thus degrading the performance of the battery powered UE.

To address the deficiencies described above, a battery-powered UE is configured to periodically generate and transmit heartbeat messages in lieu of one or more periodic tracking area update messages. The battery-powered UE initially connects to a network that forces the battery-powered UE to transmit periodic tracking area update messages within a tracking period. When the battery-powered UE initially transmits a message to the network, the battery-powered UE requests an extended active period for an active timer that is longer than the tracking period. During this extended active period, the battery-powered UE identifies itself as available to receive messages. The network thus does not enforce the requirement that the battery-powered UE transmit periodic tracking area update messages during the extended active period. When the active timer subsequently nears the expiration time, the battery-powered UE generates a heartbeat message and transmits the heartbeat message in lieu of a periodic tracking area update message. The heartbeat message resets the extended active period, and the network continues to refrain from enforcing the requirement that the battery-powered UE transmit periodic tracking area update messages. In some embodiments, the battery-powered UE expends less energy transmitting the heartbeat message at the end of an extended active period than would be expended when transmitting periodic tracking area update messages at the end of multiple tracking periods. Consequently, the battery-powered UE transmits fewer messages within a given day than the number of periodic tracking area update messages the battery-powered UE would be required to transmit within the same time frame.

At least one technical advantage of the disclosed techniques is that the disclosed techniques enable the battery-powered UE to conserve power while maintaining a connection to a cellular network. In particular, by transmitting heartbeat messages within an extended time period in lieu of transmitting periodic tracking area update messages during shorter tracking periods, the battery-powered UE can maintain a connection to a cellular network while transmitting messages with less frequency and expending less energy overall when making such transmissions. In this manner, the battery-powered UE can conserve more energy than previous techniques when maintaining a connection to a cellular network, enabling the battery-powered UE to operate longer and with more energy available to perform other functions.

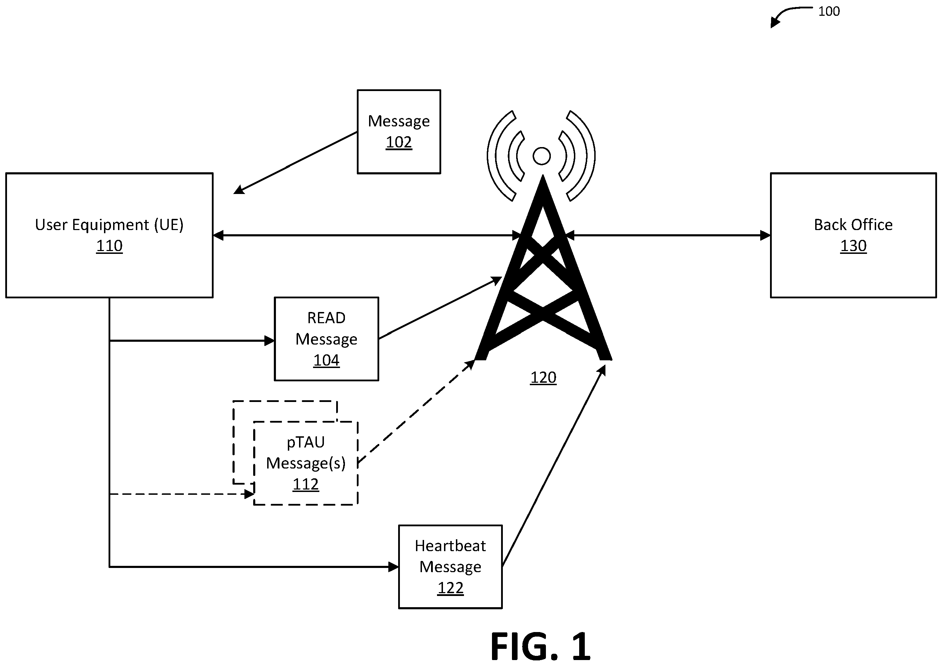

Figure 1 is a conceptual diagram of a networked environment including user equipment (UE) communicating with a cellular network, according to various embodiments. As shown, the networked environment 100 includes, without limitation, user equipment (UE) 110, an e Node B 120, a back office 130, a message 102, a READ message 104, one or more periodic tracking area update (pTAU) messages 112, and a heartbeat message 122.

The networked environment 100 provides a cellular network or another type of wide area network (WAN). The networked environment 100 can include, without limitation, one or more base stations, one or more network devices such as routers, switches, and gateways, one or more radio communications devices, and so on. The networked environment 100 provides network coverage using a plurality of cellular towers 120 over a geographic area.

The UE 110 can be a node in the networked environment 100 that connects to the e Node B 120 (e.g., a cellular tower) to communicate with other devices within the networked environment 100. In various examples, the UE 110 is a battery-powered node within the networked environment 100, such as a smart meter or device controller. In some examples, the UE 110 is a stationary device that is physically fixed and/or statically located in a particular geographic location. A given UE 110 uses one or more processors (not shown) to execute one or more components of the UE 110 such as an active timer and/or a messaging application.

In some examples, the UE 110 can switch between operation modes. For example, the UE 110 can switch between an active operation mode, such as a discontinuous reception (DRX) mode or an extended discontinuous reception (eDRX) mode, where the UE 110 can wake up to transmit or receive messages (e.g., the message 120). The UE 110 can also operate in a low power mode, such as a power savings mode (PSM) where the UE 110 consumes significantly less power than in an active mode and enters a wake up period before being available to transmit or receive messages. In some embodiments, the UE 110 operates in a hybrid sleep mode, where the UE 110 switches between operating in the eDRX mode and the PSM based on whether the UE 110 maintains a connection with the network. In such instances, the UE 110 can maintain separate timers for each mode, such as an eDRX cycle for the active mode and a PSM cycle and/or active timers for the low power mode.

The eNB 120 is capable of communicating with the back office 130 using the cellular network. In some examples, the network the eNB 120 uses to communicate with the back office includes any technically feasible wired, optical, wireless, or hybrid network that transmits data among devices. For example, the back office 130, eNB 120, and UE 110 can be connected in a wide area network, a local area network (LAN), a personal area network (PAN), wireless (WiFi) network, a cellular network, an Ethernet network, a satellite network, etc. In some examples, the UE 110 establishes a cellular link to the eNB 120.

The back office 130 represents one or more computing devices, services, or systems that communicate with the eNB 120 and/or the UE 110. In various examples, the back office 130 includes one or more server machines (not shown) configured to operate as sources for, and/or destinations of, data packets that traverse within the network system. In various examples, the back office 130 queries the eNB 120 and/or the UE 110 to obtain various data, including raw and/or processed sensor data, power consumption data, node/network throughput data, status information, and so forth. In some examples, the back office 130 also transmits commands and/or program instructions to the UE 110 to cause the UE 110 to perform various operations. For example, the back office 130 can send commands to the UE 110 to change the configuration of the UE 110 and/or the cellular link in response to the back office 130 performing one or more optimization techniques. In some examples, each server machine included in the back office 130 includes a computing device configured to execute, via a processor, a software application stored in a memory to perform various network management operations.

In various examples, the eNB 120 requires the UE 110 to transmit tracking area update messages (e.g., the READ message 104 and/or the one or more pTAU messages 112) to notify that the UE 110 is available to receive messages. In such instances, eNB 120 maintains the connection of the UE 110 over the cellular network. For example, the eNB 120 can receive periodic tracking area update (pTAU) messages 112 at specified intervals (e.g., at the end of a specified tracking period) to track the UE 110 and confirm that the UE 110 remains available. In such instances, the eNB 120 can transmit a message (e.g., the message 102) that specifies the length of the tracking period (e.g., a tracking period of 54 minutes), where the length indicates a length of an interval between sending successive messages. In such instances, the eNB 120 enforces a requirement that the UE 110 transmit a pTAU message 112 at the expiration of the tracking period. When the eNB 120 does not receive the pTAU message 112 at the end of the tracking period, the eNB 120 determines that the UE 110 is unreachable and detaches the UE 110 from the cellular network.

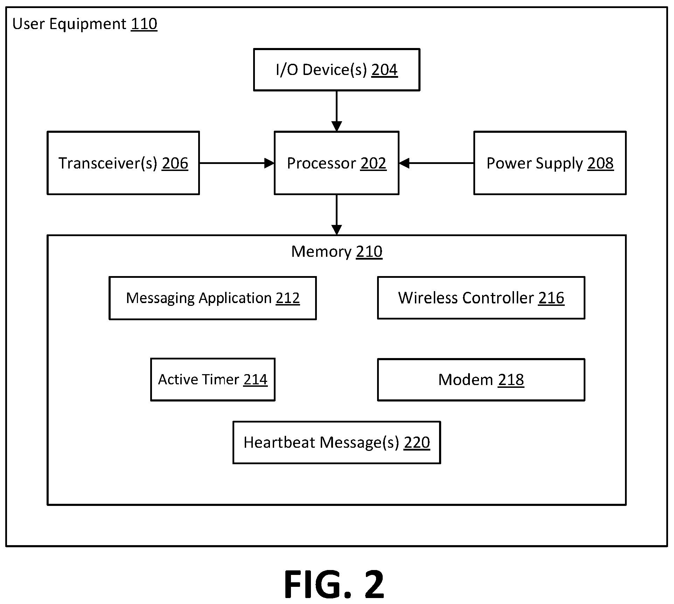

As will be discussed in further detail with respect to Figures 2-4, in some embodiments, the UE 110 can generate and send one or more messages (e.g., heartbeat messages 122) to indicate that the UE 110 is available for an extended active time period. In such instances, the eNB 120 determines that the UE 110 is available to receive communications during the extended active time period and does not require the UE 110 to transmit multiple pTAU messages 112 during the extended active time period. In some embodiments, the one or more messages can include a heartbeat message 122 that indicates that the UE 110 is negotiating for a longer active time period (e.g., negotiating for the extended active time period). In such instances, the heartbeat message 122 can cause the back office 130 to increase the value of the extended active time period (e.g., from 54 minutes to 180 minutes). The UE 110 can then transmit a subsequent heartbeat message 122 before the expiration time of the extended active time period, resetting the active timer for the low power mode. In this manner, the UE 110 can send a single heartbeat message 122 before the end of an active time period in lieu of sending multiple pTAU messages 112 at the end of a series of tracking periods. Thus, within a given time period, the UE 110 sends fewer heartbeat messages 122 (e.g., three heartbeat messages 122 in nine hours) than the number of pTAU messages 112 the eNB 120 would otherwise enforce over the same time period (e.g., ten pTAU messages 112 in nine hours).

Figure 2 is a more detailed view of a user equipment 110 of the networked environment 100 of Figure 1, according to various embodiments; As shown, the UE 110 includes, without limitation, a processor 202, one or more input/output (I/O) devices 204, one or more transceivers 206, a power supply 208, and memory 210. The memory 210 includes, without limitation, a messaging application 212, an active timer 214, a wireless controller 216, a modem 218, and one or more heartbeat messages 220 (e.g., 220(1), 220(2), t.

The user equipment 110 can be any communication device that communicates with devices in a cellular network. In one example, the user equipment 110 is a utility metering device that is coupled to, or included within, a utility distribution infrastructure in which the user equipment 110 monitors consumption of a utility commodity (e.g., water, gas, electricity, etc.). In other embodiments, the user equipment 110 is a smart streetlight. In still other embodiments, the user equipment 110 is a demand control device, such as a shut-off switch for a pool pump, an air conditioning unit, and/or the like.

The processor 202 coordinates operations of the user equipment 110. In various embodiments, the processor 202 includes any hardware configured to process data and execute software applications. The processor 202 can be any technically feasible processing device configured to process data and execute program instructions. For example, the processor 202 can include one or more central processing units (CPUs), DSPs, graphics processing units (GPUs), application-specific integrated circuits (ASICs), field-programmable gate arrays (FPGAs), microprocessors, microcontrollers, other types of processing units, and/or a combination of different processing units. The processor 202 can include a real-time clock (RTC) (not shown) according to which the processor 202 maintains an estimate of the current time. The estimate of the current time can be expressed in Universal Coordinated Time (UTC), although any other standard of time measurement can also be used.

The one or more I/O devices 204 include devices configured to receive input, devices configured to provide output, and devices configured to both receive input and provide output. As described above, in some examples, the user equipment 110 is a utility metering device that is coupled to, or included within, a utility distribution infrastructure. In this example, the one or more I/O devices 204 can further include one or more data acquisition devices that are used by user equipment 110 to monitor consumption of a utility commodity (e.g., water, gas, electricity, etc.). For example, the one or more I/O devices 204 can further include one or more of an electricity meter, a gas meter, a water meter, or some other type of sensor used to monitor consumption of a utility commodity.

The one or more transceivers 206 are configured to establish one or more communications channels (e.g., one or more cellular links) and transmit messages to and/or receive messages from other devices in the network (e.g., one or more neighboring UEs 110, the eNB 120, the back office 130, etc.). The one or more transceivers 206 can be implemented as any suitable transmission and/or reception device. In some embodiments, the one or more transceivers 206 include a plurality of antennas in an antenna array. For example, the antenna array can be a phased array that generates a steerable directional radiation pattern in a specific direction.

The power supply 208 provides power to one or more of the components included in user equipment 110. For example, the power supply 208 powers one or more of the processor 202, the I/O devices 204, the transceivers 206, and the memory 210. In some examples, the power supply 208 is connected to mains-power such that the power supply 208 powers one or more components of the user equipment 110 with mains-power. In some examples, the power supply 208 includes a battery that acquires power from a power source (e.g., chemical energy, solar energy, etc.), and the battery is used to provide power to one or more components of the user equipment 110.

The memory 210 can include any technically feasible storage device, such as a random-access memory (RAM) module, a flash memory unit, a hard disk drive, nonvolatile storage, or any other type of memory unit or combination thereof. The memory 210 is shown storing executable components of the messaging application 212, the wireless controller 216, and/or the modem 218, as well as data including the active timer 214.

The wireless controller 216 controls the operation of the one or more transceivers 206 to communicate with other devices in the networked environment 100. In various embodiments, the transceivers 206 can form a phased array that receives a feed current controlled by the wireless controller 216. In such instances, the messaging application 212 can transmit a command to the wireless controller 216 for the transceivers 206 to operate using a specific directional antenna pattern. The wireless controller 216 can respond to the command by using one or more phase shifters (not shown) and/or other hardware to control the transceivers 206 to operate using the selected directional antenna pattern.

The modem 218 transmits data via the one or more transceivers 206 by converting data from a digital format into a format suitable for an analog transmission medium. In various embodiments, the modem 218, based on one or more connection criteria, controls which available eNB 120 is selected for connection. In various embodiments, the connection criteria can be a default type, such as the relative signal strengths. In some embodiments, the type of connection criteria is dictated by a communications standard (e.g., a cellular communication standard) such that use of these selection criteria is required to comply with the standard. In some embodiments, the connection criteria specify a priority list of carrier networks. In such instances, the modem 218 can select one of the eNB 120 of the highest-priority carrier network for connection.

The messaging application 212 manages the connections maintained by the user equipment 110 to the eNB 120 and the cellular network in general. In various embodiments, the messaging application 212 executes instructions to connect to a single carrier network by transmitting instructions (e.g., suspend and resume instructions) to individual carrier networks such that the user equipment 110 maintains a single connection to a network sector of a carrier network via the eNB 120. In various embodiments, the messaging application 212 manages the connection of the user equipment 110 to the eNB by communicating with the back office 130.

In various embodiments, the messaging application 212 exchanges messages with one or more devices in the cellular network. For example, the messaging application 212 can receive messages from the back office 130 and/or the eNB 120. One of the messages can indicate the requirement for the UE 110 to transmit tracking messages to the eNB 120, where the tracking messages notify the back office 130 that the UE 110 is available to receive data. For example, the back office 130 can request that the UE 110 transmit pTAU messages 112 from the UE 110 at specified time intervals. In such instances, the messaging application 212 generates and transmits the pTAU messages 112 within the specified time intervals to maintain a connection to the cellular network. Additionally, or alternatively, the messaging application 212 can generate and transmit READ messages that include information indicating that the UE 110 is available to receive messages. In various embodiments, the messaging application 212 can parse messages from the back office 130 that include values for the length of the active time period (e.g., an active time period of 54 minutes). In such instances, messaging application 212 sets the active timer 214 to have an expiration time corresponding to the value specified in the message (e.g., an expiration time that ends at 54 minutes).

In various embodiments, the messaging application 212 can generate and send a heartbeat message 220 to the back office 130 in lieu of transmitting multiple pTAU messages. In some embodiments, the UE 110 schedules a trigger time for the messaging application 212 to generate the heartbeat message 220, where the trigger time is a time before the expiration time of the active time period ("active expiration time"). In such instances, the messaging application 212 can generate a heartbeat message 220 to transmit in lieu of a pTAU message. In some embodiments, the heartbeat message 220 is larger than the pTAU message. For example, some telecommunications standards require that the pTAU message 112 be approximately five bytes. In contrast, the heartbeat message 220 can be approximately twelve bytes. In such instances, transmitting a heartbeat message 220 can consume more energy (e.g., 460 mC) than transmitting a single pTAU message 112 (e.g., 300 mC). However, as the UE 110 transmits heartbeat messages 200 at a lower frequency than the frequency of pTAU message 112 transmissions enforced by the eNB 120, the UE 110 consumes less energy per day (e.g., 2.7 C) sending heartbeat messages at the lower frequency than the energy that would be consumed (e.g., 5.6 C) sending the requisite number of pTAU messages 112 at the higher frequency. Alternatively, in other embodiments, the heartbeat message 220 is smaller than the pTAU message. For example, the pTAU message 112 can be larger than sixteen bytes, whereas the heartbeat message 220 can be twelve bytes or smaller. In such instances, transmitting a heartbeat message 220 can consume less energy than transmitting a single pTAU message.

In various examples, the heartbeat message 220 includes information to indicate that the UE 110 remains available to receive messages. In such instances, the heartbeat message 220 indicates that the UE 110 is available to receive data and/or communications. In some embodiments, the heartbeat message 220 can indicate that the UE 110 is negotiating for a longer active time period. In such instances, the message application 212 can transmit the heartbeat message 220 to cause the back office 130 to increase the value of the active time period (e.g., from 54 minutes to 180 minutes). The UE 110 can then transmit subsequent heartbeat messages 220 at the expiration time of the longer active time period.

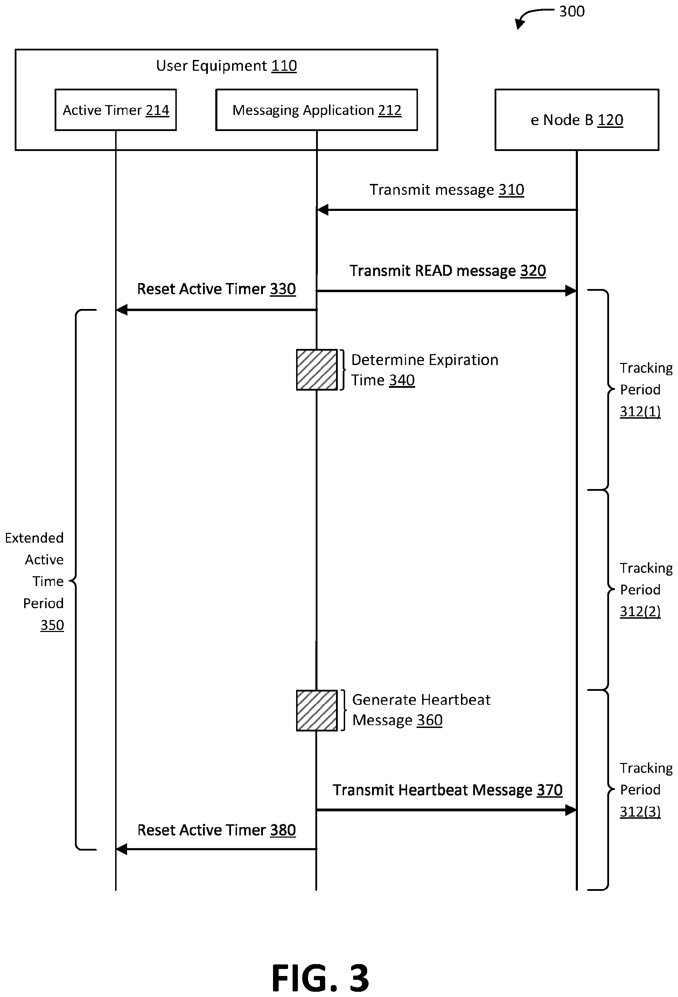

Figure 3 is an example messaging flow diagram 300 showing messaging among devices of the networked environment 100 of Figure 1, according to various embodiments. Although the interactions between the network components are shown in an order, persons skilled in the art will understand that the interactions can be performed in a different order, interactions can be repeated or skipped, and/or can be performed by components other than those described in Figure 3. As shown, the UE 110 includes, without limitation, the active timer 214 and the messaging application 212.

As shown, the eNB 120 performs the operation 310 of transmitting a message to the UE 110. In various examples, the message 102 is generated by the eNB 120. Addtionally, or alternatively, in various examples, the eNB 120 specifies the length (e.g., a tracking period length) of a given tracking period 312 (e.g., the tracking periods 312(1), 312(2), 312(3) of 54 minutes) during an initial attach procedure. The eNB 120 requires that the UE 110 transmit a tracking message at the end of the respective tracking periods 312(1)-312(3) to maintain a connection with the network. The messaging application 212 included in the UE 110 receives the message transmitted from the eNB 120. In some embodiments, the back office 130 and/or the eNB 120 tracks the reception of the tracking messages to track the UE 110 and determine that the UE 110 is available to receive communications.

In various examples, the UE 110 performs the operation 320 of transmitting a READ message 104 to the eNB 120. In such instances, the messaging application 212 transmits a READ message 104 that includes information that indicates the UE 110 is available to receive messages. In various embodiments, the READ message 104 extends an active time period (e.g., the extended active time period 350 of 186 minutes). During the extended active time period 350, the eNB 120 considers the UE 110 as active and does not require the UE 110 to send pTAU messages 112 at the expiration of the respective tracking periods 312(1)-312(3). The eNB 120 can forward the READ message 104 to the back office 130, where the back office 130 can confirm that the UE 110 is available. When the back office 130 receives the READ message 104, the eNB 120 maintains a cellular link with the UE 110.

In various examples, the UE 110 performs the operation 330 of resetting the active timer 214. In some examples, the UE 110 performs the operations 320 and 330 concurrently. In some examples, the messaging application 212 transmits a command that causes the active timer 214 to reset for the length of the extended active time period 350, which corresponds to a length of an interval between setting successive pTAU messages. In various embodiments, the extended active time period 350 is substantially longer than the tracking period 312. As shown, the extended active time period 350 is longer than a series of three tracking periods 312(1)-312(3).

In various examples, the UE 110 performs the operation 340 of determining the expiration time. In some embodiments, the messaging application 212 can process the message received from the eNB 120 and extract a value for the length of the extended active time period 350 from the message. In some examples, the messaging application 212 determines the expiration time based on the length of the extended active time period 350 and the time at which the active timer 214 was reset. In such instances, the UE 110 can schedule the messaging application 212 to generate and transmit a heartbeat message 220 before the determined expiration time.

In various examples, the UE 110 performs operations 360 to generate a heartbeat message 220. In some examples, the UE 110 schedules the messaging application 212 to generate the heartbeat message 220 at a time before the expiration time of the extended active time period 350. In such instances, the messaging application 212 can generate a heartbeat message 220 to transmit in lieu of transmitting multiple pTAU messages. In various examples, the heartbeat message 220 indicates that the UE 110 remains available to receive messages during the extended active time period 350.

In various examples, the UE 110 performs the operation 370 of transmitting the heartbeat message 220 to the eNB 120. In such instances, the messaging application 212 transmits the heartbeat message 220 to indicate that the UE 110 remains available to receive messages. The eNB 120 can forward the heartbeat message 220 to the back office 130, where the back office 130 can confirm that the UE 110 is available. When the eNB 120 and/or the back office 130 receives the heartbeat message 220, the eNB 120 maintains a cellular link with the UE 110.

In various examples, the UE 110 performs the operation 380 of resetting the active timer 214. In some examples, the UE 110 performs the operations 370 and 380 concurrently. In some examples, the messaging application 212 transmits a command that causes the active timer 214 to reset for the length of the extended active time period 350. In such instances, the extended active time period 350 matches the value specified in the message the UE 110 received from the eNB 120. Alternatively, in some examples, the UE 110 transmits the heartbeat message 220 to negotiate with the eNB 120 and/or the back office 130 to change the value of the extended active time period 350. For example, the heartbeat message 220 can include a request to use a different value for the extended active time period 350. In such instances, the eNB 120 and/or the back office 130 can transmit a subsequent message (not shown) that includes an updated value for the extended active time period 350. In such instances, when the active timer 214 is reset, the active timer 214 can use the updated extended active time period 350 and the messaging application 212 can use the updated extended active time period 350 to determine when to generate and send a subsequent heartbeat message 220.

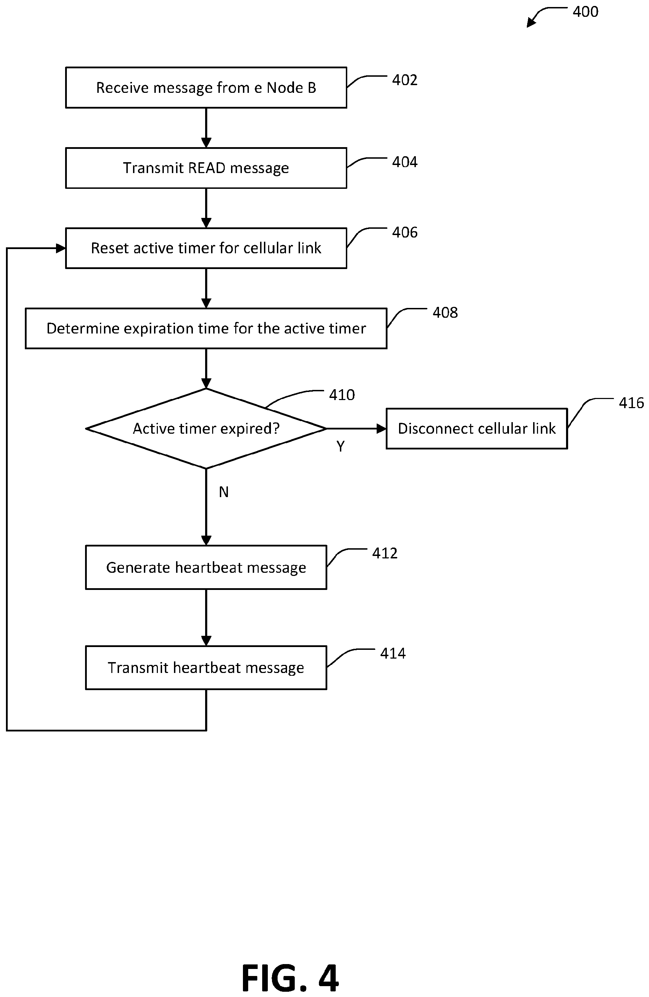

Figure 4 illustrates a flow diagram of method steps for a messaging application to mitigating the transmission of tracking area updates, according to various embodiments. Although the method steps are shown in an order, persons skilled in the art will understand that some method steps may be performed in a different order, repeated, omitted, and/or performed by components other than those described in Figure 4. Although the method steps are described with respect to the systems of Figures 1-3, persons skilled in the art will understand that any system configured to perform the method steps, in any order, falls within the scope of the various embodiments.

As shown, a method 400 begins at step 402, where the UE 110 receives a message. In various embodiments, the eNB 120 transmits a message 102 to the UE 110 that includes a value (e.g., a tracking period length) for the active time period (e.g., the tracking period 312) for transmitting tracking messages. The messaging application 212 included in the UE 110 receives the message and parses the message to retrieve the tracking period 312. The UE 110 maintains a connection to the network by transmitting periodic tracking messages upon reaching the expiration time of the tracking period 312.

At step 404, the UE 110 transmits a READ message 104 to the eNB 120. In various embodiments, the messaging application 212 transmits a READ message 104 that includes information indicating that the UE 110 is available to receive messages. The eNB 120 can forward the READ message 104 to the back office 130. In such instances, the back office 130 can confirm that the UE 110 is available. When the back office 130 receives the READ message 104, the eNB 120 maintains a cellular link with the UE 110.

At step 406, the UE 110 resets the active timer 214. In various embodiments, the messaging application 212 can execute and/or transmit a command that causes the active timer 214 to reset and remain active for the length of the active time period. In such instances, the active time period matches the value specified in the message the UE 110 received from the eNB 120 (e.g., the tracking period 312). In some embodiments, the UE 110 may negotiate for a longer active time period (e.g., the extended active time period 350) with the back office 130 subsequent to receiving the message in step 402. The messaging application 212 can then receive a subsequent message that includes a value for the extended active time period 350. In such instances, the messaging application 212 can resets the active timer 214 to remain active for the length of the extended active time period 350.

At step 408, the UE 110 determines the expiration time. In various embodiments, the messaging application 212 determines an active expiration time based on the value of the active time period and the time at which the active timer 214 was reset. For example, the messaging application can determine the time of the reset of the active timer 214 (e.g., 1200 hrs.) and can set the active expiration time as occurring at the end of the subsequent active time period (e.g., 1254 hrs. when the active time period is based on a 54 minute tracking period 312). In such instances, the UE 110 can schedule the messaging application 212 to generate and transmit a heartbeat message 220 to occur before the determined active expiration time.

At step 410, the UE 110 determines whether the active timer 214 expired. In various embodiments, the messaging application 212 performs operations to maintain a connection with the cellular network by transmitting messages before the expiration of the active time period 350. In such instances, the messaging application 212 can verify that the active time period 350 remains active before generating and transmitting a heartbeat message 220 to the eNB 120 to indicate that the UE 110 remains available to receive communications. When the messaging application 212 determines that the UE 110 is within the active time period and the active timer 214 remains active, the UE 110 proceeds to step 414. Otherwise, the messaging application 212 determines that the active timer 214 expired and proceeds to step 416.

At step 412, the UE 110 generates a heartbeat message 220. In various embodiments, the messaging application 212 schedules a time to generate the heartbeat message 220 that occurs before the determined active expiration time of the active timer 214. In such instances, the messaging application 212 can generate a heartbeat message 220 for transmission in lieu of transmitting multiple periodic tracking messages. In some examples, the heartbeat message 220 is smaller than the periodic tracking message. For example, the size of pTAU message 112 can be larger than sixteen bytes while the heartbeat message 220 can have a size twelve bytes. In various examples, the heartbeat message 220 includes information to indicate that the UE 110 remains available to receive messages.

At step 414, the UE 110 transmits the heartbeat message 220 to the eNB 120. In various embodiments, the messaging application 212 can transmit the heartbeat message 220 to the back office 130 via the eNB 120, where the heartbeat message 220 indicates that the UE 110 remains available to receive communications. The eNB 120 can forward the heartbeat message 220 to the back office 130, where the back office 130 can confirm that the UE 110 is available. When the back office 130 receives the heartbeat message 220, the eNB 120 maintains a cellular link with the UE 110. Upon transmitting the heartbeat message 220, the messaging application 212 can return to step 406 to reset the active timer 214.

At step 416, the UE 110 can disconnect the cellular link. In various embodiments, the messaging application 212 disconnects the UE 110 from the cellular network by disconnecting the cellular link to the eNB 120. In some embodiments, the messaging application 212 determines not to send either a pTAU message 112 or a heartbeat message 220. In such instances, the active timer 214 expires at the end of the active time period (e.g., the end of the extended active time period 350). The back office 130 responds to not receiving a pTAU message 112 or a heartbeat message 220 by determining that the UE 110 is not available to receive communications. The back office 130 and/or the UE 110 can also cause the UE 110 and/or the eNB 120 to disconnect cellular link. Additionally, or alternatively, in some embodiments, the messaging application 212 responds to the expiration of the active timer 214 by entering into a different operating mode. For example, the messaging application 212 can respond to the expiration of the active timer 214 by switching to a power saving mode. In some embodiments, the messaging application 212 transmitted a heartbeat message 220 before the expiration of the active timer 214 and the messaging application 212 entering the PSM mode. Alternatively, in some embodiments, the messaging application 212 did not send a heartbeat message 220 prior to the expiration of the active timer 214 and messaging application 212 disconnects the cellular link when entering the PSM mode.

In sum, a battery-powered device, such as battery-powered UE, is configured to generate and transmit one or more heartbeat messages in lieu of transmitting multiple periodic tracking messages that are otherwise enforced by an e Node B operating in a cellular network. The battery-powered UE initially receives a message that includes the length of a tracking period that is used to set an active timer controlled by the battery-powered UE. When the battery-powered UE initially transmits a periodic tracking message, the battery-powered UE resets the active timer. When the active timer subsequently nears the expiration time, the battery-powered UE generates a heartbeat message and transmits the heartbeat message in lieu of a subsequent periodic tracking messages. In some embodiments, the battery-powered UE expends less energy transmitting the heartbeat message than would be expended when transmitting the periodic tracking message. The battery-powered UE can also include in the heartbeat message information that causes the back office to increase the length used for the length to set the active time, instead using an extended active time period. The extended active time period employed by the battery-powered UE lowers the number of heartbeat messages the battery-powered UE transmits within a given period compared to the multiple periodic tracking messages that are otherwise enforced by the e Node B.

At least one technical advantage of the disclosed techniques is that the disclosed techniques enable the battery-powered UE to conserve power while maintaining a connection to a cellular network. In particular, by transmitting heartbeat messages within an extended time period in lieu of transmitting periodic tracking area update messages during shorter tracking periods, the battery-powered UE can maintain a connection to a cellular network while transmitting messages with less frequency and expending less energy overall when making such transmissions. In this manner, the battery-powered UE can conserve more energy than previous techniques when maintaining a connection to a cellular network, enabling the battery-powered UE to operate longer and with more energy available to perform other functions.
1. In various embodiments, a method comprises transmitting, by a node in a network, a message to a base station included in the network, where transmitting the message sets an active timer, determining an expiration time based on a value of an expiration period of the active timer, and transmitting, by the node prior to the expiration time, a heartbeat message in lieu of a plurality of periodic tracking messages, wherein the transmitting of the heartbeat message resets the active timer.
2. The method of clause 1, where the node is operating in a power saving mode (PSM).
3. The method of clause 1 or 2, where the node is operating in a hybrid sleep mode that includes both an extended discontinuous reception (eDRX) mode and a power saving mode (PSM), and the node is operating the eDRX mode during the active timer within the PSM.
4. The method of any of clauses 1-3, where resetting the active timer sets a second expiration time, and the node refrains from sending a second heartbeat message and enters the PSM upon reaching the second expiration time.
5. The method of any of clauses 1-4, where transmitting the plurality of periodic tracking messages consumes a first amount of energy, transmitting the heartbeat message consumes a second amount of energy, and the first amount of energy is greater than the second amount of energy.
6. The method of any of clauses 1-5, where the message includes a request by the node to use the active timer in lieu of a tracking period associated with the plurality of periodic tracking messages.
7. The method of any of clauses 1-6, where the active timer is associated with an extended active time period that is longer than a series of two or more tracking periods.
8. The method of any of clauses 1-7, further comprising transmitting, at a first interval after sending the heartbeat message, a second heartbeat message, where a periodic tracking message in the plurality of periodic tracking messages is to be sent at a second interval after a previous periodic tracking message in the plurality of periodic tracking messages was sent, and the first interval has a length at least twice a length of the second interval.
9. The method of any of clauses 1-8, where the node maintains a connection with the network before the active timer expires.
10. The method of any of clauses 1-9, where the node receives a value of the expiration period of the active timer upon connecting to the network.
11. The method of any of clauses 1-10, further comprising receiving, by the node prior to the node transmitting the message, a first message that includes a length of a tracking expiration period associated with the plurality of periodic tracking messages.
12. In various embodiments, one or more non-transitory computer-readable media store instructions which, when executed by one or more processors of an endpoint device, cause the one or more processors to perform operations comprising transmitting a read message to a back office of a cellular network, where transmitting the read message sets an active expiration time, and transmitting, prior to reaching the active expiration time, a heartbeat message that extends the active expiration time, wherein the heartbeat message is transmitted in lieu of a plurality of periodic tracking update (pTAU) messages.
13. The one or more non-transitory computer-readable media of clause 12, where the operations further comprise receiving, from the back office, a message that includes a value of an active time period for an active timer, wherein the active expiration time is set based on the active time period, setting a trigger time that occurs prior to the active expiration time, and upon reaching the trigger time, generating the heartbeat message.
14. The one or more non-transitory computer-readable media of clause 12 or 13, where the operations further comprise negotiating, by the endpoint device with the back office, a second active time period for the active timer, wherein the second active time period is greater than the active time period, and replacing the active time period for the active timer with the second active time period.
15. The one or more non-transitory computer-readable media of any of clauses 12-14, where transmitting the plurality of pTAU messages consumes a first amount of energy, transmitting the heartbeat message consumes a second amount of energy, and the first amount of energy is greater than the second amount of energy.
16. The one or more non-transitory computer-readable media of any of clauses 12-15, where the endpoint device receives a length of an expiration time for the plurality of pTAU messages 112 upon connecting to the cellular network, and the operations further comprise receiving a first message that includes the length of the expiration time.
17. In various embodiments, a node in a cellular network comprises one or more processors, one or more transceivers, and a memory storing executable instructions which, when executed by the one or more processors, cause the one or more processors to perform operations comprising transmitting a message to an e Node B (eNB) included in the cellular network, in response to transmitting the message, setting a timer, determining an expiration time based on a length of an active time period tracked by the timer, where the length is determined by a back office included in the cellular network, and transmitting, prior to the expiration time, a heartbeat message that resets the timer, wherein the heartbeat message is transmitted in lieu of a plurality of periodic tracking message tracked by the back office.
18. The node of clause 17, where transmitting the plurality of periodic tracking messages consumes a first amount of energy, transmitting the heartbeat message consumes a second amount of energy, and the first amount of energy is greater than the second amount of energy.
19.The node of clause17 or 18, where the heartbeat message increases the length of the active time period.
20. The node of any of clauses 17-19, where the operations further comprise receiving a value for a tracking period for the plurality of periodic tracking messages upon connecting to the network, where an initial message received by the node includes the value for the tracking period.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A method comprising:
transmitting, by a node (110) in a network, a first message (104) to a base station (120) included in the network, wherein transmitting the first message sets an active timer (214);
determining an expiration time based on a value of a first expiration period of the active timer; and
transmitting, by the node prior to the expiration time, a heartbeat message (122) in lieu of a plurality of periodic tracking messages (112), wherein the transmitting of the heartbeat message resets the active timer.

2. The method of claim 1, wherein the node is operating in a power saving mode (PSM).

3. The method of claim 1 or 2, wherein:
the node is operating in a hybrid sleep mode that includes both an extended discontinuous reception (eDRX) mode and a power saving mode (PSM), and
the node is operating the eDRX mode during the active timer within the PSM.

4. The method of claim 3, wherein:
resetting the active timer sets a second expiration time; and
the node refrains from sending a second heartbeat message and enters the PSM upon reaching the second expiration time.

5. The method of any preceding claim, wherein:
transmitting the plurality of periodic tracking messages consumes a first amount of energy;
transmitting the heartbeat message consumes a second amount of energy; and
the first amount of energy is greater than the second amount of energy.

6. The method of any preceding claim, wherein the first message includes a request by the node to use the active timer in lieu of a tracking period associated with the plurality of periodic tracking messages.

7. The method of claim 6, wherein the active timer is associated with an extended active time period that is longer than a series of two or more tracking periods.

8. The method of any preceding claim, further comprising transmitting, at a first interval after sending the heartbeat message, a second heartbeat message, wherein:
a periodic tracking message in the plurality of periodic tracking messages is to be sent at a second interval after a previous periodic tracking message (112) in the plurality of periodic tracking messages was sent; and
the first interval has a length at least twice a length of the second interval.

9. The method of any preceding claim, wherein the node maintains a connection with the network before the active timer expires.

10. The method of any preceding claim, wherein the node receives a value of the first expiration period of the active timer upon connecting to the network.

11. The method of claim 10, further comprising receiving, by the node prior to the node transmitting the first message, a second message that includes a length of a tracking expiration period associated with the plurality of periodic tracking messages.

12. The method of any preceding claim, further comprising:
receiving, from the base station, a second message that includes the value of the expiration period;
setting a trigger time that occurs prior to the expiration period of the active timer; and
upon reaching the trigger time, transmitting the heartbeat message.

13. The method of any preceding claim, further comprising:
negotiating, by the node with a back office (130), a second expiration period for the active timer, wherein the second expiration period is greater than the first expiration period; and
replacing the first expiration period for the active timer with the second expiration period.

14. One or more non-transitory computer-readable media storing instructions which, when executed by one or more processors of a node (110) in a network, cause the one or more processors to perform the method of any one of claims 1 to 13.

15. A node (100) in a cellular network, the node comprising:
one or more processors (202);
one or more transceivers (206); and
a memory (210) storing executable instructions which, when executed by the one or more processors, cause the one or more processors to perform the method of any one of claims 1 to 13.
